# EUROPEAN PATENT SPECIFICATION

(11) **EP 4 287 051 B1**
(45) Date of publication and mention of the grant of the patent: **15.07.2026**
(21) Application number: 22176333.7
(22) Date of filing: 31.05.2022
(51) Int. Cl.: G06F 21/56, G06F 21/55, G06F 21/52

(54) **ARRANGEMENT AND METHOD OF THREAT DETECTION IN A COMPUTER OR COMPUTER NETWORK**
ANORDNUNG UND VERFAHREN ZUR BEDROHUNGSERKENNUNG IN EINEM COMPUTER ODER COMPUTERNETZWERK
AGENCEMENT ET PROCÉDÉ DE DÉTECTION DE MENACES DANS UN ORDINATEUR OU UN RÉSEAU INFORMATIQUE

(43) Date of publication of application: 06.12.2023
(73) Proprietor: WithSecure Corporation, 00180 Helsinki (FI)
(72) Inventor: AQUILINO, Broderick, 00180 HELSINKI (FI); TURBIN, Pavel, 00180 HELSINKI (FI)
(74) Representative: Berggren Oy

(56) References cited:
- EP-A1- 3 502 944
- WO-A1-2007/090224
- US-A1- 2021 232 685
- US-A1- 2021 336 968

## Description

### Technical Field

The present invention relates to an arrangement and a method of threat detection in a computer or computer network.

### Background

Malware detection and scanning is a vital issue for the security of any kind of endpoints and networks. Malware detection and scanning is generally directed to identify and potentially also disinfect any kind of malware on computer and/or communication systems, such as e.g. viruses, Trojans, worms, or other kinds of security threats.

Antimalware file scanning is commonly a slow process and usually also depends on how reliable results are desired. One of highest accuracy method for recognizing clean or malicious files or applications is to run the file or application to be analyzed in a managed environment and later analyze its application activity. When a malware is detected, it has to be removed from a device. One of significant challenges in malware removal is to find the settings changed by malware and distinct them from legit changes made by a user and/or an administrator of a device or a system.

Typical method of identifying that a setting was created by malware is to try to deduce if setting somehow points to dropped malware, for example by finding launch points. However, in a device, such as a computer, or in a system there are many generic and miscellaneous settings. When malware gets removed after it was detected by an antimalware solution or software, many generic settings of a device or a system are returned to the system default, especially if malware removal is made by a generic script. This may cause inconvenience to user or even system malfunction if system had custom configuration.

A patent application US20210336968A1 relates to a method, computer program product, and system for detecting and mitigating ransomware using snapshot-based backups applied to a block-oriented storage device, by performing the following operations: (i) performing, in predetermined time-intervals, snapshot backups of data in a block-oriented storage device; (ii) determining at least one interval malware index value between a last snapshot backup and a next planned snapshot backup, wherein the interval malware index value is indicative of a changed block rate in stored data of storage blocks of the block-oriented storage device; and (iii) in response to determining that the interval malware index value is larger than a predefined interval malware index threshold value, triggering an emergency snapshot.

A patent application WO2007090224A1 relates to an automated threat analysis system comprising a core in an isolated environment, the core associated with an input interface and an output interface. The core comprises one or more core components and an operating system having at least one library hooked to at least one of the one or more core components.

A patent application EP3502944A1 relates to systems, techniques, and computer program products for preventing execution, by a scripting engine, of harmful commands that may be introduced by computer malware or other mechanisms.

Further relevant prior art is represented by patent application US 2021/232685 A1 and patent US7784098B1.

Therefore, it would be desirable to enable an efficient malware detection which is also able to remove the malware reliably and so that the user of the device or the system does not have to configure the device or the system after malware removal.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, of threat detection in a computer or computer network, wherein the method comprises determining that an application is starting at a computer, such as a network node or an endpoint, intercepting the application start and identifying the risk rating of the application, based on the identified risk rating of the application creating a snapshot of the computer if the risk rating of the application is high, such as above a certain reputation threshold value, and/or if the risk rating of the application is unknown, and allowing the application to run after the identification of the risk rating of the application. If the application is determined to be malware when the application is running, stopping the application, removing the malware and reverting changes made to the computer based on the said snapshot of the computer.

In one embodiment of the invention the method comprises identifying that the application is malware by at least monitoring behavior of the application when the application is running and/or based on signatures of the application.

In one embodiment of the invention the snapshot comprises at least current system settings, application settings, security settings, DNS-settings, scheduled tasks and/or setting related to backups or shadow copy of the computer.

In one embodiment of the invention reverting the computer comprises setting the settings of the computer back to the values stored in the snapshot.

In one embodiment of the invention removing the malware comprises at least terminating the malware processes, deleting registry values pointing to malware components and files.

In one embodiment of the invention the method comprises deleting the created snapshot after the risk rating check if the risk rating of the application is below a certain threshold level and/or the risk rating of the application is acceptable, and/or after the computer has been reverted by using the snapshot.

In one embodiment of the invention identifying the risk rating of the application comprises making a query to a reputation and/or a risk rating database at the computer and/or at a backend of a threat detection network.

In one embodiment of the invention identifying risk rating of the application and/or whether the application is malware or not is based on input from the users of the computers of a threat detection network.

In one embodiment of the invention the application risk rating is at least in part based on user decision history, e.g. a quarantine history, such as quarantine-decision or un-quarantine-decision, for the application and/or for the past applications received from users of the system and/or collected by a backend of a threat detection network.

In one embodiment of the invention the user decisions, such as an un-quarantine-request and/or quarantine-request, received from the user at the computer for the application is reported to a threat detection network.

In one embodiment of the invention a sensor at the computer is used to allow to intercept a file, a system configuration value and/or network operations called by the application. The sensor can be used to observe operation of the device, such as a computer, and information collected by the sensor can be used to detect malicious behavior of an application, a file and/or a process.

According to a second aspect, the invention relates to an arrangement for threat detection in a computer or computer network, wherein the arrangement comprises at least one computer, wherein the computer is configured to determine that an application is starting at the computer, such as a network node or an endpoint, to intercept the application start, to identify the risk rating of the application, based on the identified risk rating of the application to create a snapshot of the network node or endpoint if the risk rating of the application is high, such as above a certain risk rating threshold value, and/or if the risk rating of the application is unknown, to allow the application to run after the identification of the risk rating of the application. If the application is determined to be malware when the application is running, the computer is configured to stop the application and to remove the malware and to revert changes made to the computer based on the said snapshot of the computer.

In one embodiment of the invention the arrangement is configured to carry out a method according to any embodiment of the invention.

According to a third aspect, the invention relates to a computer program comprising instructions which, when executed by a computer, cause the computer to carry out a method according to the invention.

According to a fourth aspect, the invention relates to a computer-readable medium comprising the computer program according to the invention.

With the solution of the invention, it's possible to implement an efficient malware scanning and make it possible to remove the malware reliably and so that the settings of the device and/or the system are set back to values before the malware made changes to the setting values of the device or the system. This is also made in an efficient manner with the solution of the invention as the snapshot created by the solution is deleted when it's not needed anymore, e.g. when the application or file is detected as not being malware and/or when the settings have already been reversed based on the snapshot. The term snapshot in the description is used to define storing certain setting values of a device or a system at a certain moment of time.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents as a schematic diagram a computer system or computer network configuration, for which exemplifying embodiments of the present invention are applicable.
- Figure 2: presents schematically an example embodiment of a solution of the present invention.
- Figure 3: presents an example embodiment of a solution of the present invention as an execution flow diagram.
- Figure 4: presents an example method according to one embodiment of the invention.
- Figure 5: presents as a schematic diagram an example of a structure of an arrangement according to exemplifying embodiments of the present invention.

### Detailed description

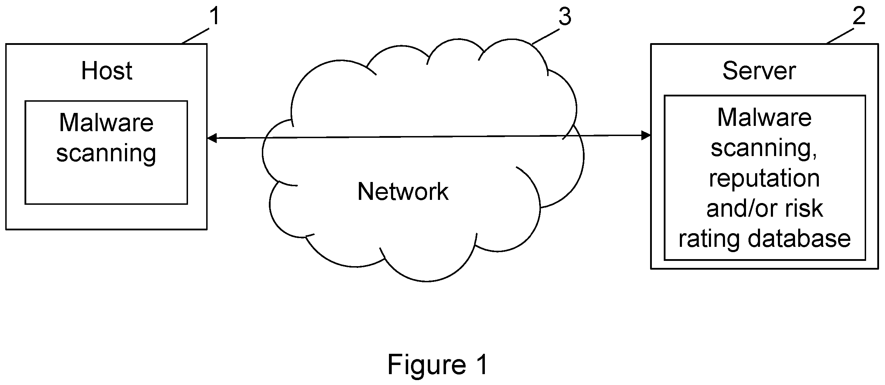

Figure 1 presents an environment in which the solution of the invention can be used. In the solution of Figure 1 a system configuration is presented in which a local host 1 and a remote entity or server 2 are connected via a network 3. Here, the host 1 exemplifies any computer or communication system, including a single device, a network node or a combination of devices, on which malware scanning is to be performed. The scanning can be done at the host and/or at the server. For example, the host 1 may include a personal computer, a personal communication device, a network-enabled device, a client, a firewall, a mail server, a proxy server, a database server, or the like. The server 2 exemplifies any computer or communication system, including a single device, a network node or a combination of devices, on which malware scanning can be performed for the host 1, or which can provide data for the host 1 required to carry out the malware scanning at the host, such as risk rating and/or reputation data. For example, the server 2 may include a security entity or a backend entity of a security provider, or the like, and the server 2 may be realized in a cloud implementation or the like.

According to exemplifying embodiments of the invention, malware scanning at the host 1 and/or by the server 2 can be realized using a malware analysis environment, such as a virtual machine or emulator environment, can be arranged at the host and/ or at the server. For example, a malware scanning agent or sensor, such as e.g. an anti-virus software can be installed/arranged at the host 1 to be used for malware scanning. In one embodiment of the invention a sensor or agent at the computer is used to allow to intercept a file, a system configuration value and/or network operations called by the application. The sensor can be used to observe operation of the device, such as a computer, and information collected by the sensor can be used to detect malicious behavior of an application, a file and/or a process.

In one embodiment of the invention the malware scanning environment, service and/or software can detect starting and closing of applications, all unusual processes and attach monitoring to the required applications and processes. Also, when the services are started early, the service is able to detect and follow most of user's application. In one embodiment of the invention, when the malware scanning software or service is started up, it can perform running application inventory.

The network 3 exemplifies any computer or communication network, including e.g. a (wired or wireless) local area network like LAN, WLAN, Ethernet, or the like, a (wired or wireless) wide area network like WiMAX, GSM, UMTS, LTE, or the like, and so on. Hence, the host 1 and the server 2 can but do not need to be located at different locations. For example, the network 3 may be any kind of TCP/IP-based network. Insofar, communication between the host 1 and the server 2 over the network 3 can be realized using for example any standard or proprietary protocol carried over TCP/IP, and in such protocol the malware scanning agent at the host 1 and the malware analysis sandbox or application at the server 2 can be represented on/as the application layer.

In the solution of the invention the device, e.g. a sensor and/or a malware scanning agent on the host, such as a computer, detects that an application is starting at the host. The application start is intercepted, and the risk rating of the application is identified. Based on the identified risk rating of the application a snapshot of the device is created if the risk rating of the application is high, such as above a certain risk rating threshold value, and/or if the risk rating of the application is unknown. The application is allowed to run after the identification of the risk rating of the application. If the application is determined to be malware when the application is running, the application is stopped, the malware is removed, and changes made to the host are reverted based on the said snapshot of the host. In one embodiment of the invention the risk rating can be identified by making a request from a server 2, which server may comprise a malware scanning and risk rating and/or reputation database.

In one example embodiment of the invention the solution of the invention can comprise e.g. at least one of the following more detailed steps. In this example the antimalware software, application or solution installed to a host is able to determine that an application is about to run. An antimalware monitor, e.g. real-time monitor, intercepts the application run and identifies risk rating of the application or file, e.g. executable. If the risk rating of the application is high, e.g. above a certain threshold value or unknown, antimalware application takes a snapshot of system settings. The settings can be for example settings listed in the table below. After the identification of the risk rating of the application, the application is allowed to run. In some later moment application is detected as malware by behavior or signatures. Because of this malware removal is started. This can comprise e.g. terminating malware processes, deleting register values pointing to malware components and removing files created and/or changes by the malware processes and or files relating to the detected malware. After these settings are restored from the snapshot made after the risk rating of the application was checked.

The following table presents some examples of settings that can be stored when creating a snapshot of a device or a system:

| Settings | |
|---|---|
| Windows Explorer settings e.g. "hide extensions for known file types" | Malware can set to hide extension so files with double extension may look legit e.g. program.txt.exe will be looking as text file. |
| | However, user may set the same setting as personal choice. |
| Desktop wallpaper | Ransomware can commonly set wallpaper with ransom note. |
| Windows update | A malware can disable Windows update to prevent their removal with next update. However, system administrator may disable updates as they are provided with alternative update mechanism. |
| Windows security settings | Firewall, anti-ransomware and other settings maybe changed by malware or assigned by administrator depending on the configuration |
| ect\hostsfile DNS overrides | A malware can override legit hosts to block connectivity e.g. set "example.com" as 127.0.0.1 However, system administrator may change hostsfile with legit purpose |
| Scheduled task | Some malwares can register itself to be executed by system scheduler. Task can run complex chain of commands and it can be quite hard to connect malware task to its executables. |
| Volume Shadow Copy | Ransomware can disable shadow copy to prevent data recovery. This also could be disabled by admin as part of system configuration |

The table is not exhaustive and given as example and any setting of a device, system, service and/or application changed by malware can be included to the created snapshot in the solution of the invention. In one embodiment of the invention only a part of the settings of the device are included in the snapshot.

When identifying risk rating of the application, the risk rating can be queried e.g. from a server, such as a server of a threat detection network, which server has collected information from different endpoints for creating a database of the risk ratings of different applications and files. The risk rating information can comprise for example information on the reputation of the application and/or e.g. that a certain application is not malicious or that a certain application is malicious or malware.

In one embodiment of the invention removing the malware comprises at least terminating the malware processes, deleting registry values pointing to malware components and files.

In one embodiment of the invention the method comprises deleting the created snapshot after the risk rating check if the risk rating of the application is below a certain threshold level and/or the risk rating of the application is acceptable, and/or after the computer has been reverted by using the snapshot.

In one embodiment of the invention the method comprises identifying that the application is malware by at least monitoring behaviour of the application when the application is running and/or based on signatures of the application.

In one embodiment of the invention behaviour-based detection can be used for identifying malicious apps. There are several approaches which can be used, for example host intrusion prevention system (HIPS) and a sandbox service.

A host intrusion prevention system runs in the endpoints, where it monitors and evaluates individual operations separately. A host intrusion prevention system may also collect all the operations of an app and upstream them to a backend service to build a risk rating for the app.

In some scenarios the protection provided by a traditional host intrusion prevention system can be insufficient because malicious behaviour can comprise combinations of multiple operations that are benign by themselves. As a result, a host intrusion prevention system may have to block earlier resulting to false positives and incomplete behaviour upstream. Due to the nature of a host intrusion prevention system, it is also not able to monitor a process indefinitely limiting the number of operations that can be collected. When an host intrusion prevention system choose to block later, it may be too late because a malware may have already caused some damages.

For a sandbox service, an app is usually uploaded to a backend service, where it will be detonated in a virtual machine. The virtual machine and sandbox service can also be used at the local machine, e.g. an endpoint or host. The service will monitor the behaviour of the app in the virtual machine and use it to build a risk rating for the app. In one embodiment of the invention, virtualization or emulation, such as hardware virtualization, e.g. Hyper-V, software virtualization or emulation can be utilized. Virtual machine or emulator can execute a virtual copy of operating system on local machine or a server, such as a LAN server. In one embodiment a virtual machine or a software emulator can be started and/or initialized in response to starting a software application at a local machine. The software application is passed to the virtual machine or the software emulator. Application events and/or behavior is analyzed at the virtual machine or the software emulator to determine malicious behavior of the application. Based on the detected malicious behavior of the software application at the virtual machine or the software emulator, the local machine is notified about the malicious behavior and the virtual machine.

A sandbox may seem like a better alternative for certain scenarios than a host intrusion prevention system because a sandbox service is able to evaluate multiple operations together and monitor the application or file longer. Sandbox, e.g. as a cloud service, may be expensive to operate and in some cases there may be too many suspicious samples that can be detonated in practice. Malware used in a targeted attack may also behave differently in their target systems than in sandbox.

Also, users may have valuable insight about the apps they are installing and in one embodiment of the invention identifying risk rating of the application and/or whether the application is malware or not is at least in part based on input from the users of the computers of a threat detection network. In one embodiment user decisions about the applications or files can be collected by the system for creating reputation and/or risk rating database.

In one embodiment of the invention the application risk rating is at least in part based on a user decision history, such as quarantine-decision or un-quarantine-decision, for the application and/or for the past applications received from users of the system and/or collected by a backend of a threat detection network. In one embodiment of the invention a user decision, such as an un-quarantine-request and/or quarantine-request, received from the user at the computer for the application is reported to a threat detection network. In one embodiment of the invention the user decision history is one of the inputs used to generate a risk rating and/or reputation for a certain application. The user decision history may comprise user's decisions for past detected applications and the current application.

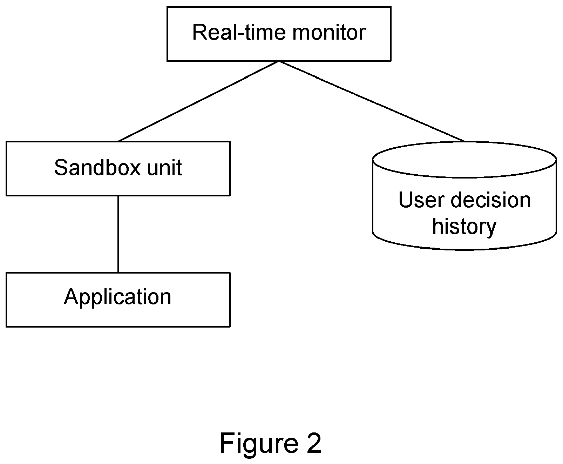

Fig. 2 presents one example embodiment of the invention in which information for determining a risk rating of a file or application can be collected from the users of the devices and/or users of a system. In the following the components or functionalities of the embodiment of Figure 2 are presented. The components for this solution can comprise in one embodiment of the invention a real-time monitor, a sandbox unit, at least one application and a user decision history.

In one embodiment of the invention a real-time monitor can be responsible for deciding whether an application should be analysed based on certain risk factors, tracking the origin of the application, initiating analysis and/or recording the result of the analysis and upstreaming them to the backend.

A sandbox unit can in one embodiment of the invention be a group of components that enable tracing of system-wide behaviour of a given application in a contained manner by executing the application with restrected access and/or non-persistent access (changes made by the application may be rolled back). Containment may be achieved by executing the application on the host, but network can be throttled and/or filtered and system changes are reverted when a behaviour of the app matches certain heuristics. Alternatively, the app may be detonated in a virtual machine running on the endpoint. The application can only be allowed to execute on the host when its behaviour did not match any heuristics. The unit can be responsible for quarantining the app, and when the app was already executed on the host, also to revert the system changes e.g. based on the created snapshot. Likewise, the unit can also be responsible for performing the undo on any quarantine operations. If the malware analysis is done at a virtual machine, reverting the device and/or system settings and/or removal of detected malware may not be necessary.

The application (APP), e.g. in Figure 2, can be an actual user executable that matches certain risk factors for which a threat analysis is required. In one embodiment a file, a document and/ or a script can be analyzed with the solution of the invention in addition or instead of the application.

User decision history presented Figure 2 and which can be used in the solution of the invention can be a collection of apps that have been caught by the heuristics of the sandbox unit. It can comprise information of the hash of the application, information when the application triggered a heuristic and whether the user has kept the application in quarantine or has chosen to undo the quarantine. This information can be used by a backend service to measure how much weight is to be given to the user's decision.

A behaviour report can be sent from a device to the server of the backend. The behaviour report can comprise at least one of the following: download sources, hashes and locations of components, system-wide file, registry and process operations, and users' insights. This information can significantly increase the accuracy of the heuristics. For example, multiple un-quarantine reports received from different devices or endpoints indicate that certain combination of operations is clean. This information can be fed back into the analytics to generate an update for the heuristic and to prevent it from triggering again on similar scenarios.

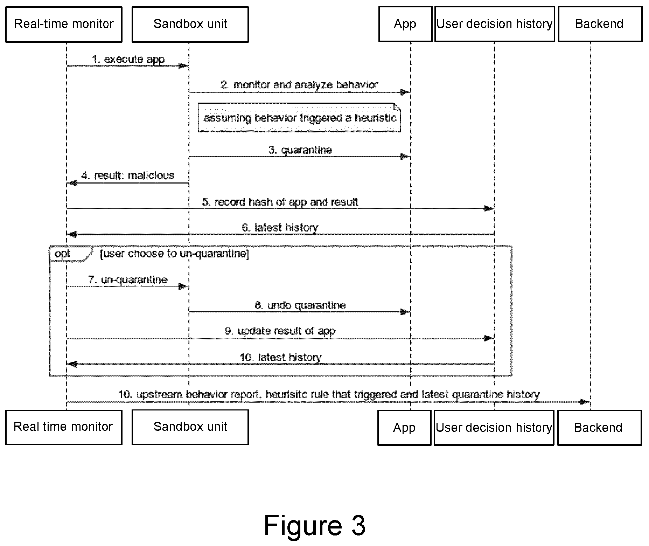

Fig. 3 presents the operation of different components or functions according to one embodiment of the invention. The components can be essentially similar components as described in connection with Fig. 2 and the solution of Figure 3 can be used to collect information for determining a risk rating of a file or application from the users of the system. In this example a real-time monitor encounters an application that matches certain risk factor and real-time monitor requests the sandbox unit to analyse the application. The sandbox unit monitors or collects the behaviour of the application and, e.g. periodically, and evaluates them against a set of heuristics. Next a heuristic is triggered, and the sandbox unit quarantines the application. After that the analysis result (e.g. malicious or not malicious) is reported to the real-time monitor. The real-time monitor adds a record to the user decision history for the application and set its result to quarantined. Then the real-time monitor collects the latest user decision history. In an optional embodiment, when the user chose to un-quarantined the app, the real-time monitor can request the sandbox unit to perform un-quarantine. The sandbox unit can then undo the given quarantine operation. Based on this the real-time monitor can update the corresponding result of the app in the user decision history to allowed-state. In one embodiment of the invention the real-time monitor can upstream the behaviour report and/or the identification information of the heuristic rule that triggered and the latest user decision history after a predefined time duration has passed.

The example flow of Fig. 3 is only an example of how one embodiment of the solution of the invention can be implemented. The real-time monitor presented in Figure 2 or 3 does not have to be any separate element or component but in the solution of the invention its functionality can be included in the system, malware analysis environment and/or the functionality of an endpoint and/or a server. In one embodiment of the invention the functionality of the real-time monitor can be implemented in the local host e.g. in the endpoint antimalware software.

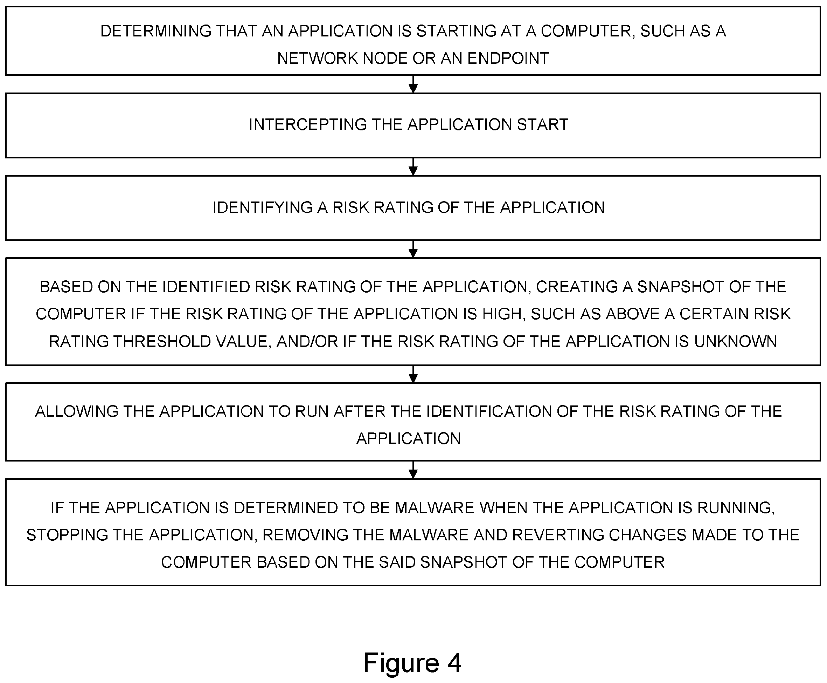

Figure 4 presents an example method according to one embodiment of the invention. The example method comprises determining that an application is starting at a computer, such as a network node or an endpoint, intercepting the application start, identifying the risk rating of the application, based on the identified risk rating of the application creating a snapshot of the computer if the risk rating of the application is high, such as above a certain risk rating threshold value, and/or if the risk rating of the application is unknown, and allowing the application to run after the identification of the risk rating of the application. If the application is determined to be malware when the application is running, stopping the application, removing the malware and reverting changes made to the computer based on the said snapshot of the computer.

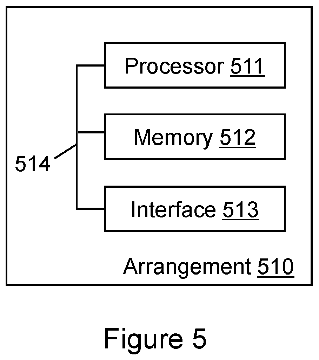

As presented in Figure 5, an arrangement 510 or at least part of the arrangement, e.g. an endpoint and/or a server, according to exemplifying embodiments of the present invention may comprise at least one processor 511 and at least one memory 512 (and possibly also at least one interface 513), which may be operationally connected or coupled, for example by a bus 514 or the like, respectively.

The processor 511 of the arrangement 510 is configured to read and execute computer program code stored in the memory 512. The processor may be represented by a CPU (Central Processing Unit), a MPU (Micro Processor Unit), etc., or a combination thereof. The memory 512 of the arrangement 510 is configured to store computer program code, such as respective programs, computer/processor-executable instructions, macros or applets, etc. or parts of them. Such computer program code, when executed by the processor 511, enables the arrangement 510 to operate in accordance with exemplifying embodiments of the present invention. The memory 512 may be represented by a RAM (Random Access Memory), a ROM (Read Only Memory), a hard disk, a secondary storage device, etc., or a combination of two or more of these. The interface 513 of the arrangement 510 is configured to interface with another arrangement and/or the user of the arrangement 510. That is, the interface 513 may represent a communication interface (including e.g. a modem, an antenna, a transmitter, a receiver, a transceiver, or the like) and/or a user interface (such as a display, touch screen, keyboard, mouse, signal light, loudspeaker, or the like).

The arrangement 510 may, for example, represent a (part of a) first node, such as local entity or host 1 in Figure 1, or may represent a (part of a) second node, such as remote entity or server 2 in Figure 1. The arrangement 510 may be configured to perform a procedure and/or exhibit a functionality as described in any one of Figures 2 to 3.

According to exemplifying embodiments of the present invention, the electronic file to be analyzed for malware can be any electronic file, particularly encompassing any electronic file including a runnable/executable part, such as any kind of application file. Insofar, exemplifying embodiments of the present invention are applicable to any such electronic file, including for example a file of an Android Application Package (APK), a Portable Executable (PE), a Microsoft Soft Installer (MSI) or any other format capable of distributing and/or installing application software or middleware on a computer.

The data collected with the solution of the invention may be stored in a database or similar model for information storage for further use.

In an embodiment, further actions may be taken to secure the computer or the computer network when a malicious file, application or activity has been detected. Also actions by changing the settings of the computers or other network nodes can be done. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the security backend to the nodes. In one embodiment of the invention one or more of these actions may be initiated automatically.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. A computer implemented method (Fig. 4) of threat detection in a computer or computer network, wherein the method comprises:
determining that an application is starting at a computer, such as a network node or an endpoint,
intercepting the application start,
identifying the risk rating of the application,
based on the identified risk rating of the application, creating a snapshot of the computer if the risk rating of the application is high, such as above a certain risk rating threshold value, and/or if the risk rating of the application is unknown,
allowing the application to run after the identification of the risk rating of the application, and
if the application is determined to be malware when the application is running, stopping the application, removing the malware and reverting changes made to the computer based on the said snapshot of the computer.

2. A method according to claim 1, wherein the method comprises identifying that the application is malware by at least monitoring behavior of the application when the application is running and/or based on signatures of the application.

3. A method according to claim 1 or 2, wherein the snapshot comprises at least current system settings, application settings, security settings, DNS-settings, scheduled tasks and/or setting related to backups or shadow copy of the computer.

4. A method according to any previous claims, wherein reverting the computer comprises setting the settings of the computer back to the values stored in the snapshot.

5. A method according to any previous claims, wherein removing the malware comprises at least terminating the malware processes, deleting registry values pointing to malware components and files.

6. A method according to any previous claims, wherein the method comprises deleting the created snapshot after the risk rating check if the risk rating of the application is below a certain threshold level and/or the risk rating of the application is acceptable, and/or after the computer has been reverted by using the snapshot.

7. A method according to any previous claims, wherein identifying the risk rating of the application comprises making a query to a risk rating and/or reputation database at the computer and/or at a backend of a threat detection network.

8. A method according to any previous claims, wherein identifying risk rating of the application and/or whether the application is malware or not is based on input from the users of the computers of a threat detection network.

9. A method according to any previous claims, wherein the application risk rating is at least in part based on a user decision history, e.g. a quarantine history, such as quarantine-decision or un-quarantine-decision, for the application and/or for the past applications received from users of the system and/or collected by a backend of a threat detection network.

10. A method according to any previous claims, wherein user decision history , such as an un-quarantine-request and/or quarantine-request, received from the user at the computer for the application is reported to a threat detection network.

11. A method according to any previous claims, wherein a sensor at the computer is used to allow to intercept a file, a system configuration value and/or network operations called by the application.

12. An arrangement (510) for threat detection in a computer or computer network, wherein the arrangement comprises at least one computer, wherein the computer is configured:
to determine that an application is starting at the computer, such as a network node or an endpoint,
to intercept the application start,
to identify the risk rating of the application,
based on the identified risk rating of the application, to create a snapshot of the network node or endpoint if the risk rating of the application is high, such as above a certain risk rating threshold value, and/or if the risk rating of the application is unknown,
to allow the application to run after the identification of the risk rating of the application, and
if the application is determined to be malware when the application is running, to stop the application and to remove the malware and to revert changes made to the computer based on the said snapshot of the computer.

13. An arrangement according to claim 12, wherein the arrangement is configured to carry out a method according to any claim 2 - 11.

14. A computer program comprising instructions which, when executed by a computer, cause the computer to carry out the method according to any of claims 1 - 11.

15. A computer-readable medium comprising the computer program according to claim 14.

## Patentansprüche

1. Computerimplementiertes Verfahren (Fig. 4) zur Bedrohungserkennung in einem Computer oder Computernetzwerk, wobei das Verfahren Folgendes umfasst:
Bestimmen, dass eine Anwendung an einem Computer, beispielsweise einem Netzwerkknoten oder einem Endpunkt, gestartet wird,
Abfangen des Anwendungsstarts,
Identifizieren der Risikobewertung der Anwendung,
basierend auf der identifizierten Risikobewertung der Anwendung Erstellen eines Snapshots des Computers, falls die Risikobewertung der Anwendung hoch, beispielsweise über einem bestimmten Risikobewertungsschwellenwert, ist und/oder falls die Risikobewertung der Anwendung unbekannt ist,
Zulassen der Ausführung der Anwendung nach der Identifizierung der Risikobewertung der Anwendung und,
falls während der Ausführung der Anwendung bestimmt wird, dass die Anwendung Malware ist, Stoppen der Anwendung, Entfernen der Malware und Rückgängigmachen der an dem Computer vorgenommenen Änderungen basierend auf dem Snapshot des Computers.

2. Verfahren nach Anspruch 1, wobei das Verfahren Identifizieren, dass die Anwendung Malware ist, zumindest durch Überwachen des Verhaltens der Anwendung während der Ausführung der Anwendung und/oder basierend auf Signaturen der Anwendung umfasst.

3. Verfahren nach Anspruch 1 oder 2, wobei der Snapshot zumindest aktuelle Systemeinstellungen, Anwendungseinstellungen, Sicherheitseinstellungen, DNS-Einstellungen, geplante Aufgaben und/oder Einstellungen in Bezug auf Backups oder Schattenkopien des Computers umfasst.

4. Verfahren nach einem der vorhergehenden Ansprüche, wobei das Zurücksetzen des Computers Zurücksetzen der Einstellungen des Computers auf die in dem Snapshot gespeicherten Werte umfasst.

5. Verfahren nach einem der vorhergehenden Ansprüche, wobei das Entfernen der Malware zumindest Beenden der Malware-Prozesse umfasst, wobei Registrierungswerte gelöscht werden, die auf Malware-Komponenten und -Dateien zeigen.

6. Verfahren nach einem der vorhergehenden Ansprüche, wobei das Verfahren Löschen des erstellten Snapshots nach der Risikobewertungsprüfung umfasst, falls die Risikobewertung der Anwendung unter einem bestimmten Schwellenniveau liegt und/oder die Risikobewertung der Anwendung akzeptabel ist und/oder nachdem der Computer unter Verwendung des Snapshots zurückgesetzt wurde.

7. Verfahren nach einem der vorhergehenden Ansprüche, wobei das Identifizieren der Risikobewertung der Anwendung Abfragen einer Risikobewertungs- und/oder Reputationsdatenbank an dem Computer und/oder an einem Backend eines Bedrohungserkennungsnetzwerks umfasst.

8. Verfahren nach einem der vorhergehenden Ansprüche, wobei das Identifizieren einer Risikobewertung der Anwendung und/oder, ob die Anwendung Malware ist oder nicht, auf einer Eingabe von den Benutzern der Computer eines Bedrohungserkennungsnetzwerks basiert.

9. Verfahren nach einem der vorhergehenden Ansprüche, wobei die Anwendungsrisikobewertung zumindest teilweise auf einer Benutzerentscheidungshistorie, z. B. einer Quarantänehistorie, beispielsweise einer Quarantäneentscheidung oder Quarantäneaufhebungsentscheidung, für die Anwendung und/oder für die früheren Anwendungen basiert, die von Benutzern des Systems empfangen und/oder durch ein Backend eines Bedrohungserkennungsnetzwerks gesammelt werden.

10. Verfahren nach einem der vorhergehenden Ansprüche, wobei eine Benutzerentscheidungshistorie, beispielsweise eine Quarantäneaufhebungsanforderung und/oder Quarantäneanforderung, die von dem Benutzer an dem Computer für die Anwendung empfangen wird, an ein Bedrohungserkennungsnetzwerk gemeldet wird.

11. Verfahren nach einem der vorhergehenden Ansprüche, wobei ein Sensor an dem Computer verwendet wird, um Abfangen einer Datei, eines Systemkonfigurationswerts und/oder von Netzwerkoperationen zu ermöglichen, die von der Anwendung aufgerufen werden.

12. Anordnung (510) zur Bedrohungserkennung in einem Computer oder einem Computernetzwerk,
wobei die Anordnung mindestens einen Computer umfasst, wobei der Computer zu Folgendem konfiguriert ist:
Bestimmen, dass eine Anwendung an dem Computer, beispielsweise einem Netzwerkknoten oder einem Endpunkt, gestartet wird,
Abfangen des Anwendungsstarts,
Identifizieren der Risikobewertung der Anwendung,
basierend auf der identifizierten Risikobewertung der Anwendung Erstellen eines Snapshots des Netzwerkknotens oder Endpunkts, falls die Risikobewertung der Anwendung hoch, beispielsweise über einem bestimmten Risikobewertungsschwellenwert, ist und/oder falls die Risikobewertung der Anwendung unbekannt ist,
Zulassen der Ausführung der Anwendung nach der Identifizierung der Risikobewertung der Anwendung und,
falls während der Ausführung der Anwendung bestimmt wird, dass die Anwendung Malware ist, Stoppen der Anwendung, Entfernen der Malware und Rückgängigmachen der an dem Computer vorgenommenen Änderungen basierend auf dem Snapshot des Computers.

13. Anordnung nach Anspruch 12, wobei die Anordnung dazu konfiguriert ist, ein Verfahren nach einem der Ansprüche 2-11 durchzuführen.

14. Computerprogramm, umfassend Anweisungen, die, wenn sie von einem Computer ausgeführt werden, den Computer veranlassen, das Verfahren nach einem der Ansprüche 1-11 durchzuführen.

15. Computerlesbares Medium, umfassend das Computerprogramm nach Anspruch 14.

## Revendications

1. Procédé (Fig. 4), mis en œuvre par ordinateur, de détection de menaces dans un ordinateur ou un réseau informatique, le procédé comprenant les étapes suivantes :
déterminer qu'une application démarre au niveau d'un ordinateur, tel qu'un nœud de réseau ou un point d'extrémité,
intercepter le démarrage de l'application,
identifier le niveau de risque de l'application,
sur la base du niveau de risque identifié de l'application, créer un instantané de l'ordinateur si le niveau de risque de l'application est élevé, par exemple au-dessus d'une certaine valeur seuil de niveau de risque, et/ou si le niveau de risque de l'application est inconnu,
autoriser l'exécution de l'application après l'identification du niveau de risque de l'application, et
si l'application est déterminée comme étant un programme malveillant lorsque l'application est en cours d'exécution, arrêter l'application, supprimer le programme malveillant et rétablir les modifications apportées à l'ordinateur sur la base dudit instantané de l'ordinateur.

2. Procédé selon la revendication 1, dans lequel le procédé comprend l'identification du fait que l'application est un programme malveillant en surveillant au moins le comportement de l'application lorsque l'application est en cours d'exécution et/ou sur la base de signatures de l'application.

3. Procédé selon la revendication 1 ou la revendication 2, dans lequel l'instantané comprend au moins des paramètres actuels du système, des paramètres d'application, des paramètres de sécurité, des paramètres DNS, des tâches programmées et/ou des paramètres liés à des sauvegardes ou des clichés instantanés de l'ordinateur.

4. Procédé selon l'une quelconque des revendications précédentes, dans lequel le rétablissement de l'ordinateur comprend de régler les paramètres de l'ordinateur aux valeurs stockées dans l'instantané.

5. Procédé selon l'une quelconque des revendications précédentes, dans lequel la suppression du programme malveillant comprend au moins de mettre fin aux processus de programme malveillant et de supprimer les valeurs de registre pointant vers des composants et des fichiers de programme malveillant.

6. Procédé selon l'une quelconque des revendications précédentes, dans lequel le procédé comprend de supprimer l'instantané créé après la vérification du niveau de risque si le niveau de risque de l'application est inférieur à un certain niveau seuil et/ou si le niveau de risque de l'application est acceptable, et/ou après que l'ordinateur a été récupéré en utilisant l'instantané.

7. Procédé selon l'une quelconque des revendications précédentes, dans lequel l'identification du niveau de risque de l'application comprend de procéder à une interrogation de la base de données d'évaluation de risque et/ou de réputation au niveau de l'ordinateur et/ou au niveau d'un système dorsal d'un réseau de détection de menaces.

8. Procédé selon l'une quelconque des revendications précédentes, dans lequel l'identification du niveau de risque de l'application et/ou déterminer si l'application est un programme malveillant ou non sont basés sur une entrée provenant des utilisateurs des ordinateurs d'un réseau de détection de menaces.

9. Procédé selon l'une quelconque des revendications précédentes, dans lequel le niveau de risque de l'application est au moins en partie basé sur un historique de décision des utilisateurs, par exemple un historique de quarantaine, tel qu'une décision de quarantaine ou une décision de non-quarantaine, pour l'application et/ou pour les applications passées reçu des utilisateurs du système et/ou collecté par un système dorsal d'un réseau de détection de menaces.

10. Procédé selon l'une quelconque des revendications précédentes, dans lequel l'historique de décision des utilisateurs, tel qu'une demande de non-quarantaine et/ou une demande de quarantaine, reçu de l'utilisateur au niveau de l'ordinateur pour l'application est rapporté à un réseau de détection de menaces.

11. Procédé selon l'une quelconque des revendications précédentes, dans lequel un capteur au niveau de l'ordinateur est utilisé pour permettre d'intercepter un fichier, une valeur de configuration de système et/ou des opérations de réseau appelées par l'application.

12. Agencement (510) de détection de menaces dans un ordinateur ou un réseau informatique,
l'agencement comprenant au moins un ordinateur, l'ordinateur étant configuré :
pour déterminer qu'une application démarre au niveau de l'ordinateur, tel qu'un nœud de réseau ou un point d'extrémité,
pour intercepter le démarrage de l'application,
pour identifier le niveau de risque de l'application,
sur la base du niveau de risque identifié de l'application, pour créer un instantané du nœud de réseau ou du point d'extrémité si le niveau de risque de l'application est élevé, par exemple au-dessus d'une certaine valeur seuil de niveau de risque, et/ou si le niveau de risque de l'application est inconnu,
pour permettre à l'application de s'exécuter après l'identification du niveau de risque de l'application, et
si l'application est déterminée comme étant un programme malveillant lorsque l'application est en cours d'exécution, pour arrêter l'application, supprimer le programme malveillant et pour rétablir les modifications apportées à l'ordinateur sur la base dudit instantané de l'ordinateur.

13. Agencement selon la revendication 12, dans lequel l'agencement est configuré pour mettre en œuvre un procédé selon l'une quelconque des revendications 2 à 11.

14. Programme informatique comprenant des instructions qui, lorsqu'elles sont exécutées par un ordinateur, amènent l'ordinateur à exécuter le procédé selon l'une quelconque des revendications 1 à 11.

15. Support lisible par ordinateur comprenant le programme informatique selon la revendication 14.
